(19) Europäisches Patentamt
European Patent Office
Office européen des brevets

(11) **EP 1 165 632 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**02.10.2019 Patentblatt 2019/40**

(45) Hinweis auf die Patenterteilung:
**29.10.2003 Patentblatt 2003/44**

(21) Anmeldenummer: **00901592.6**

(22) Anmeldetag: **24.01.2000**

(51) Int Cl.:
**C08F 8/22** (2006.01)       **C08F 214/26** (2006.01)
**B29C 47/00** (2006.01)

(86) Internationale Anmeldenummer:
**PCT/EP2000/000528**

(87) Internationale Veröffentlichungsnummer:
**WO 2000/044797 (03.08.2000 Gazette 2000/31)**

(54) **TETRAFLUOR ETHYLEN / HEXAFLUOR PROPYLEN COPOLYMERE MIT BESSERER AUSZIEHBARKEIT**

TETRAFLUORO ETHYLENE / HEXAFLUORO PROPYLENE COPOLYMERS WITH BETTER DUCTILITY

COPOLYMERE TETRAFLUORO ETHYLENE / HEXAFLUORO PROPYLENE PRESENTANT UNE APTITUDE A L'ETIRAGE AMELIOREE

(84) Benannte Vertragsstaaten:
**AT BE CH CY DE DK ES FI FR GB GR IE IT LI LU MC NL PT SE**

(30) Priorität: **29.01.1999 DE 19903657**
**29.01.1999 US 117780 P**

(43) Veröffentlichungstag der Anmeldung:
**02.01.2002 Patentblatt 2002/01**

(73) Patentinhaber: **Dyneon GmbH**
**84508 Burgkirchen (DE)**

(72) Erfinder:
• **KAULBACH, Ralph**
**D-84547 Emmerting (DE)**
• **KILLICH, Albert**
**D-84508 Burgkirchen (DE)**
• **KLOOS, Friedrich**
**D-84556 Kastl (DE)**

• **LÖHR, Gernot**
**D-84508 Burgkirchen (DE)**
• **MAYER, Ludwig**
**D-84508 Burgkirchen (DE)**
• **PETERS, Erik**
**D-84518 Garching (DE)**
• **BLONG, Thomas**
**Woodbury, MN 55125 (US)**
• **DUCHESNE, Denis**
**Woodbury, MN 55125 (US)**

(74) Vertreter: **Kurz, Arnd**
**3M Deutschland GmbH**
**3M Office of Intellectual Property Councel**
**Carl-Schurz-Strasse 1**
**41453 Neuss (DE)**

(56) Entgegenhaltungen:
**EP-A- 0 222 945       WO-A-94/05712**

EP 1 165 632 B2

**Beschreibung**

Sachgebiet der Erfindung

Die vorliegende Erfindung betrifft die Verwendung zur Beschichtung von Drahtleitern von Schmelzgranulaten von aus der Schmelze verarbeitbaren Copolymeren aus Tetrafluorethylen (TFE) und Hexafluorpropylen (HFP) und ein Verfahren zur Herstellung von Polymeren, wie in den Ansprüchen beschrieben.

Hintergrund

Aus der Schmelze verarbeitbare Copolymere mit TFE und HFP sind unter der Bezeichnung FEP bestens bekannt. Als perfluorierte Thermoplaste haben solche Copolymere einzigartige Endanwendungseigenschaften wie Chemikalienbeständigkeit, Witterungsbeständigkeit, Schwerentflammbarkeit, thermische Stabilität und ausgezeichnete elektrische Eigenschaften. Wie andere Thermoplaste läßt sich FEP in einfacher Weise zu beschichteten Drähten, Schläuchen, Rohren, Folien und Filmen formen.

Wegen seiner hervorragenden thermischen Stabilität und weil es praktisch nicht entflammbar ist, wird FEP häufig als Konstruktionsmaterial für Hallen und Versammlungsräume verwendet, um die strengen Brandschutzauflagen zu erfüllen. FEP empfiehlt sich wegen seiner hervorragenden dielektrischen Eigenschaften auch sehr für die Verwendung in Datenübertragungskabeln (EP-A-423 995).

Bei der Extrusionsbeschichtung von Drähten und Kabeln sind hohe Verarbeitungsgeschwindigkeiten gefordert. Derartigen hohen Extrusionsraten sind jedoch bei vielen Thermoplasten durch Schmelzebrüchen Grenzen gesetzt. Schmelzebrüche führen zu rauhen Oberflächen und/oder ungleichmäßigen Wandstärken. Daher wird angenommen, daß man zur Erhöhung der Extrusionsgeschwindigkeit ein Copolymer mit sehr breiter Molekulargewichtsverteilung verwenden sollte, beispielsweise bei den FEPs gemäß US-A-4 552 925.

Um die Molekulargewichtsverteilung wesentlich zu verbreitern, wird meist eine Mischung von mindestens zwei FEPs mit stark unterschiedlichem Molekulargewicht verwendet. Die Molekulargewichte werden meist anhand von Schmelzeviskosität oder Schmelzflußindex (MFI-Wert) charakterisiert. Die gewünschten Mischungen werden oftmals dadurch erhalten, daß man die Komponenten separat durch Polymerisation herstellt und sie anschließend in Form von Latices, Perlen oder flaumigen Produkten vor der Schmelzgranulierung vermischt. Die Herstellung dieser Mischungen ist deshalb mühsam und teuer.

Andere FEP-Mischungen werden in DE 26 13 642 und DE 26 13 795 offenbart.

Diese Mischungen sind angeblich vorteilhaft, um das während des Stabilisationsvorgangs von FEP auftretende Schäumen zu unterdrücken. Dabei behandelt man das Harz bei hohen Temperaturen (bis 400 °C), vorzugsweise mit Wasserdampf. Mit Hilfe dieses Verfahrens werden thermisch instabile Endgruppen (größtenteils COOH- und $CONH_2$-Gruppen) beseitigt. Diese Endgruppen können leicht mittels IR-Spektroskopie detektiert werden.

Diese Mischungen weisen eine sehr breite Molekulargewichtsverteilung auf, was nach allgemeiner Auffassung der Fachleute die Extrudierbarkeit verbessert.

Für die Verarbeitung von FEP, insbesondere für Drahtummantelungen, müssen thermisch instabile Endgruppen entfernt werden. Die Zersetzungsreaktion der instabilen Endgruppen, die in "Modern Fluoropolymers", Herausgeber John Scheirs, Wiley & Sons 1997, Seite 228, beschrieben wird, führt zu Blasen und Löchern in den Endprodukten. Die Schmelzgranulierung von nicht stabilisierten Polymerharzen führt zu Korrosionsschäden an den verwendeten Apparaturen und zu Metallverunreinigungen des hergestellten Schmelzgranulats. Die in DE 26 13 642 und DE 26 13 795 beschriebenen Stabilisierungsverfahren sind jedoch schwierig durchzuführen, da sie wegen der Verwendung von Wasserdampf Korrosionsprobleme an den verwendeten Apparaturen aufwerfen.

Metallverunreinigungen sind schwierig zu beherrschen und können zum Abbau und zur Zersetzung des Copolymers bei hohen Verarbeitungstemperaturen führen. Diese Zersetzung führt zu Verfärbungen und Abbau sowie zu Verlegungen an Düsen. Hierbei handelt es sich um Ansammlungen von Molekülfraktionen des Polymers an der Oberfläche des Düsenausgangs, die den Beschichtungsprozeß negativ beeinflussen. Außerdem können auch sogenannte "Kegelbrüche" auftreten. Beim Beschichten eines Drahts wird das schmelzflüssige Polymer in Form eines Rohrs oder Mantels extrudiert und mittels Vakuum auf den Draht aufgezogen. Kegelbrüche sind Unterbrechungen oder Brüche, die bei diesem Prozeß auftreten. Jedesmal wenn ein solcher Kegelbruch auftritt, muß man den Beschichtungsprozeß neu beginnen und warten, bis das System wieder ins Gleichgewicht kommt. Dies führt dazu, daß es schwierig wird, lange Betriebszeiten zu erreichen. Außerdem verringert sich die Produktivität.

Des weiteren müssen die Extrusionstemperaturen so niedrig wie möglich gehalten werden, um Zersetzungsreaktionen und der daraus resultierenden Abgabe toxischer Gase entgegenzuwirken, deren Geschwindigkeit mit steigender Temperatur deutlich zunimmt. Andererseits bewirken niedrige Extrusionstemperaturen höhere Schmelzeviskositäten und damit ein früheres Auftreten von Schmelzebrüchen. Eine Erniedrigung der Schmelzegrenzviskosität durch Verringerung des Molekulargewichts führt zu schlechteren mechanischen Eigenschaften.

Daraus ergibt sich, daß das Material nicht nur durch Eliminierung der thermisch instabilen Endgruppen, sondern auch durch Vermeidung von Metallverunreinigungen und gegenüber scherendem und/oder thermischem Abbau anfälligeren Mw-Fraktionen thermisch stabiler gemacht werden sollte.

Eine weitere Möglichkeit zur Eliminierung instabiler Endgruppen ist die Nachfluorierung, beispielsweise gemäß GB-A-1 210 794, US-A-4 743 658 und EP-B-457 225. Im allgemeinen setzt man bei diesem Verfahren mit Stickstoff verdünntes elementares Fluor ein und arbeitet bei erhöhten Temperaturen bis zum Schmelzbereich des Polymers. Das Polymer kann hierbei in Form von Schmelzgranulaten, Agglomeraten oder flaumigen Produkten fluoriert werden. Auch hierbei sind allzu starke Verunreinigungen mit Metallen zu vermeiden.

In EP-B-222 945 wird die Fluorierung von gehärteten Agglomeraten beschrieben, die dort als Granulat bezeichnet werden.

Die Fluorierung führt zu perfluorierten Endgruppen, wohingegen die oben beschriebene Behandlung mit feuchter Hitze mechanistisch nicht zur Bildung eines durchfluorierten Polymerharzes führen kann. Es ist anzunehmen, daß in diesem Fall in der Hauptkette des Polymers insertierte Doppelbindungen vorhanden sind, die eine inhärente thermische Instabilität bewirken. Diese Bindungen bewirken möglicherweise die Verfärbungen bei langandauernder Einwirkung hoher Temperaturen.

In US-A-4 626 587 wird eine weitere FEP-Abbaureaktion beschrieben. Hierbei soll die Reaktion damit beginnen, daß zunächst bei Temperaturen oberhalb des Schmelzpunktes HFP-Diaden in der Kettenmitte gespalten werden. Solche Diaden bilden sich bei der radikalischen Polymerisation durch Rekombination der entsprechenden Polymerradikale als Abbruchschritt. Die Zerstörung der Diaden unter den Verarbeitungsbedingungen führt zu einer Halbierung des Molekulargewichts dieser Polymerketten, was die mechanischen Eigenschaften des Polymers negativ beeinflußt, und außerdem zur Bildung von instabileren Endgruppen. Gemäß US-A-4 626 587 werden derartige Diaden durch Einwirkung sehr hoher Scherraten auf das Material bei einer Temperatur, die deutlich über dem Schmelzpunkt liegt, zerstört. Dieses Verfahren ist außerdem sehr teuer.

Ein weiteres Verfahren zur Verminderung der Instabilität der Hauptkette wird in EP-A-789 038 offenbart. Dabei wird die Terminierung von Polymerradikalen durch Verwendung von relativ großen Mengen eines Kettenübertragungsmittels unterdrückt.

EP 0 222 945 und WO 94/5712 beschreiben die Verwendung von Copolymeren aus TFE und HFP für Drahtkabelbeschichtungen

## Kurzdarstellung der Erfindung

Die vorliegende Erfindung ist in den Ansprüchen beschrieben.

## Detaillierte Beschreibung

Bei dem erfindungsgemäß verwendeten Polymer handelt es sich um ein aus der Schmelze verarbeitbaren, schmelzgranaliertes Copolymer von TFE und HFP. Es weist einen HFP-Gehalt im Bereich von 5 bis 22 Gew.-%, vorzugsweise 10 bis 18 Gew.-%, einen TFE-Gehalt von 95 bis 78 Gew.-%, vorzugsweise 90 bis 82 Gew.-%, auf und enthält gegebenenfalls bis zu 3 Mol-% eines fluorierten Monomers, das mit HFP und TFE copolymerisierbar ist. Bei dem gegebenenfalls vorhandenen Comonomer handelt es sich vorzugsweise um einen Perfluoralkylvinylether gemäß EP-A-789 038 und DE-C-27 10 501. Der Monomerengehalt kann IR-spektroskopisch ermittelt werden, wie es in US-A-4 552 925 beschrieben ist. Die erfindungsgemäßen Polymere haben in der Regel einen Schmelzpunkt von 240 bis 275 °C, vorzugsweise 245 bis 265 °C.

Das erfindungsgemäß verwendete Polymer ist im wesentlichen frei von thermisch instabilen Endgruppen, deren Entfernung durch Nachfluorierung der Agglomerate erfolgt. Unter "im wesentlichen frei von Endgruppen" sind weniger als 30 Endgruppen pro Million Kohlenstoffatome zu verstehen. Die Substanz weist in Bezug auf Metalle einen hohen Reinheitsgrad auf, daß heißt, daß der Gesamtgehalt an Eisen, Chrom und Nickel unter 200 ppb (= parts per billion), vorzugsweise unter 100 ppb, liegt.

Das zur Beschichtung von Drahtleitern erfindungsgemäß verwendete Polymer weist eine sehr enge Molekulargewichtsverteilung auf, das heißt ein Mw/Mn-Verhältnis von weniger als 2 (Mw = Gewichtsmittel, Mn = Zahlenmittel des Molekulargewichts). Der Mindestwert für dieses Verhältnis beläuft sich auf 1,5. Dies steht im Gegensatz zu den für Drahtbeschichtungen mit hohen Extrusionsraten empfohlenen FEP-Qualitäten, für die eine breite Molekulargewichtsverteilung angeraten wird. Die Breite der Molekulargewichtsverteilung wird nach der Methode von W. H. Tuminello, Polym. Eng. Sei. 26, 1339 (1986) bestimmt. Für die Hochgeschwindigkeitsdrahtextrusion ist der MFI-Wert des Polymers > 15. Niedrigere MFI-Werte sind für andere Anwendungen brauchbar, wie zum Beispiel geschäumtes Koaxialkabel. Dieses Polymer ist vorzugsweise im wesentlichen frei von instabilen Endgruppen. Ganz besonders bevorzugt handelt es sich dabei um das erfindungsgemäße Polymer.

Ein für die erfindungsgemäße Verwendung schmelgranuliertes Copolymer mit einem MFI-Wert von 24 und 15 Gew.-% HFP kann wie unten beschrieben hergestellt werden. Dieses Polymer kann mit einem Drahtbeschichtungsextruder bei beispielsweise 390 °C (735 °F) mit einer Geschwindigkeit von 454 m/min (1500 Fuß/min) über eine Maschinenlaufzeit von 6 Stunden betrieben werden, und zwar ohne Verfärbung, ohne Auftreten wesentlicher Düsenverlegungen und mit weniger Kegelbrüchen als mit handelsüblichen FEP-Qualitäten. Die Ursachen für die überraschend gute Leistung sind nicht ganz geklärt.

Trotz enger Molekulargewichtsverteilung lassen sich hohe Verarbeitungsraten erreichen. Wie oben bereits ausgeführt wurde, geht man in der Fachwelt davon aus, daß zur Erzielung von derartig hohen Verarbeitungsraten eine breite Molekulargewichtsverteilung erforderlich ist. Es wurde nun gefunden, daß eine enge Molekulargewichtsverteilung besser ist, wodurch ein herrschendes Vorurteil überwunden wird.

Darüber hinaus tritt bei der Verarbeitung keinerlei Verfärbung auf. Dies ist ein Indiz dafür, daß keine Zersetzungsreaktion stattfindet. Der MFI-Wert des extrudierten Materials ist praktisch unverändert. Die Zahl der mittels IR detektierbaren Endgruppen nimmt nicht zu. Aus diesen beiden Befunden ist zu schließen, daß kein signifikanter Kettenabbau stattfindet. Diese Beobachtung deutet darauf hin, daß in dem Material keine schwachen Hauptkettenbindungen, wie beispielsweise HFP-Diaden (US-A-4 626 587), vorhanden sind.

Wie das Fehlen von Verfärbungen sowie der nahezu unveränderte MFI-Wert und die nahezu unveränderte Zahl von Endgruppen beweisen, tritt selbst bei höheren Verarbeitungstemperaturen keine nennenswerte Zersetzung auf. Es wird angenommen, daß dies zu verminderter Düsenverlegung und der starken Abnahme der Häufigkeit von Kegelbrüchen führt. Damit zeichnet sich das erfindungsgemäß verwendete Copolymer durch eine überraschend hohe thermische Stabilität selbst unter Scherbelastung aus.

Der Nachweis des Fehlens von Zersetzungsreaktionen ist überraschend und noch nicht ganz geklärt. Es wird angenommen, daß Metallverunreinigungen, insbesondere die Schwermetalle Eisen, Nickel und Chrom, eine Zersetzungsreaktion induzieren könnten. In der Tat ergab die Neutronenaktivierungs-Analyse, daß das verwendete Material nur weniger als 50 ppb an Eisen-, Nickel- und Chromionen enthielt. Das erfindungsgemäß verwendete Copolymer kann somit als hochrein eingestuft werden.

Das erfindungsgemäß verwendete Polymer kann nach dem nachstehend beschriebenen Verfahren hergestellt werden.

Die Polymerisation kann als radikalische wäßrige Emulsionspolymerisation durchgeführt werden, wie sie im Stand der Technik bekannt ist (siehe US-A-2 946 763). Als Initiatoren verwendet man Ammonium- oder Kaliumperoxodisulfat. Als Emulgatoren werden Standardemulgatoren, wie zum Beispiel das Ammoniumsalz der Perfluoroctansäure, verwendet. Der Formulierung können Puffersubstanzen, wie zum Beispiel $NH_3$, $(NH_4)_2CO_3$ oder $NaHCO_3$, zugesetzt werden. Man verwendet übliche Kettenübertragungsmittel, wie zum Beispiel $H_2$, niedere Alkane, Methylenfluorid oder Methylenchlorid. Chlor- und bromhaltige Kettenübertragungsmittel sollten vermieden werden. Diese Komponenten können bei der Fluorierung starke Korrosionsschäden verursachen. Die Polymerisationstemperatur kann 40 bis 120 °C und vorzugsweise 50 bis 80 °C betragen; der Polymerisationsdruck kann 8 bis 25 bar, vorzugsweise 10 bis 20 bar, betragen. HFP wird vorgelegt und dem Reaktor nach den Regeln der Copolymerisation zudosiert [siehe zum Beispiel "Modern Fluoropolymers", Herausgeber John Scheirs, Wiley & Sons (1997), Seite 241]. Die bevorzugte Polymerisationsformulierung ist frei von Alkalimetallsalzen.

Des weiteren wird die Copolymerisation bevorzugt so durchgeführt, daß im Gegensatz zu EP-A-789 038 kein Kettenübertragungsmittel verwendet wird. Kettenübertragungsmittel führen automatisch zu einer Verbreiterung der Molekulargewichtsverteilung. Die Auftragung der Polymerisationsgeschwindigkeit gegen die Zeit soll die Form der in "Modern Fluoropolymers", Herausgeber John Scheirs, Wiley & Sons, 1997, Seite 226, beschriebenen Kurve aufweisen. Wie in dieser Veröffentlichung angegeben wird, kann das Mw/Mn-Verhältnis leicht aus den Auftragungen der Geschwindigkeit gegen die Zeit in Abwesenheit eines Kettenübertragungsmittels mittels Gleichung (6), Seite 230, berechnet werden, wobei angenommen wird, daß der Abbruch ausschließlich durch Rekombination erfolgt. Die Rekombination führt bei niedrigen Umsätzen zu einem Mw/Mn-Verhältnis von 1,5. Ein hautsächlich durch Kettenübertragung erfolgender Abbruch führt zu einem Mw/Mn-Verhältnis von 2.

Die radikalische Polymerisation kann auch in einem nichtwäßrigen Medium, zum Beispiel R 113, durchgeführt werden, wie es in US-A-3 528 954 beschrieben wird. Dieses nichtwäßrige Verfahren ist jedoch nicht bevorzugt, weil angenommen wird, daß es aufgrund des in dieser "Suspensionspolymerisation" auftretenden Geleffekts auch niedrigere Anteile an hochmolekularen Produkten liefert. Wahrscheinlicher ist, daß schwache Hauptkettenbindungen (HFP-Diaden) durch den Geleffekt entstehen. Das Auftreten eines Geleffekts bei der wäßrigen Emulsionspolymerisation ist völlig unwahrscheinlich, weil Kettenwachstum und -abbruch an der Oberfläche der Latex-Partikel stattfinden.

Die bei der Polymerisation anfallende Dispersion wird mechanisch mit einem Homogenisator koaguliert (siehe EP-B-591 888) und mit einer nicht mit Wasser mischbaren organischen Flüssigkeit, beispielsweise Benzin, agglomeriert wie es im Stand der Technik gut bekannt ist (siehe "Modern Fluoropolymers", Herausgeber John Scheirs, Wiley & Sons, 1997, Seite 227). Bei den Agglomeraten handelt es sich um freifließende Perlen mit einem Durchmesser von 0,5 bis 2 mm. Die Freifließbarkeit ist im Hinblick auf die technisch sichere Durchführung der folgenden Aufarbeitungsschritte bevorzugt. Die Trocknung des Agglomerats erfolgt durch Spülen mit Stickstoff und dann unter mäßigem Vakuum bei Temperaturen bis zu 180 °C.

Eine chemische Koagulation des Agglomerats ist ebenfalls möglich. Hierzu verwendet man jedoch im allgemeinen Säuren. Dies ist nicht bevorzugt, da es zu sehr hohen Gehalten an Metallverunreinigungen bei allen nachfolgenden Aufarbeitungsschritten führt.

Das Agglomerat kann dann bei Temperaturen von 60 bis 150 °C, vorzugsweise bei 100 bis 140 °C, mit einer Mischung von Fluor in Stickstoff fluoriert werden. Die Mischung enthält im allgemeinen 10 Gew.-% Fluor. Die Fluorierung wird so lange fortgesetzt, bis 90 bis 95 % der Endgruppen des ursprünglichen Agglomerats eliminiert worden sind, Höhere Fluorierungstemperaturen können zu einer schwer zu kontrollierenden Änderung des MFI-Wertes führen, der bis zu 30 % betragen kann. Dies kann zu einer Verbreiterung der Molekulargewichtsverteilung führen und die Leistungsfähigkeit negativ beeinflussen.

Infolgedessen wird keine Reproduzierbarkeit erreicht, wodurch die Qualität und die Einheitlichkeit von Drähten und Kabeln, die mit dem Polymer beschichtet sind, negativ beeinflußt wird. Da die Reaktionszeiten durch höhere Temperaturen nicht wesentlich verkürzt wurden, werden höhere Fluorierungstemperaturen nicht als vorteilhaft eingestuft. Darüber hinaus können hohe Temperaturen dazu führen, daß das Agglomerat vorsintert oder sogar sintert und das Material an der Apparatewand klebenbleibt. Die Fluorierung wird in einem Taumeltrockner durchgeführt, der das Material in Bewegung hält. Auf diese Weise werden homogenere Reaktionsbedingungen erzielt. Das freifließende Agglomerat soll möglichst keine Feinanteile enthalten und mechanisch so stabil sein, daß sich bei der Nachbehandlung im wesentlichen keine Feinanteile bilden. Feinanteile können die Zuverlässigkeit der Verfahrensführung negativ beeinflussen. Auf eine Härtung des Agglomerats, wie sie in EP-B-222 945 beschrieben wird, kann hier verzichtet werden.

Die Fluorierung des Agglomerats hat zwei Vorteile. Sie ist nicht diffusionskontrolliert, da sich die Endgruppen an der Oberfläche der Latexpartikel befinden. Die Reaktionszeiten sind deshalb relativ kurz. Außerdem ist ungehärtetes Agglomerat so weich, daß keine Metallverunreinigungen von der Wand des Taumeltrockners abgekratzt werden. Auf diese Weise wird der Gehalt an Metallverunreinigungen verringert. Beides trifft auf die Fluorierung von Schmelzgranulat nicht zu. In diesem Fall sind für die Fluorierung höhere Temperaturen und wesentlich längere Reaktionszeiten erforderlich, um der Tatsache Rechnung zu tragen, daß die Reaktion unter Diffusionskontrolle abläuft. Außerdem kratzt das harte und scharfe Schmelzgranulat eine beträchtliche Menge an Metall von der Wand des Taumeltrockners ab. Eine Verlängerung der Reaktionszeit führt zu einer stärkeren Verunreinigung mit Metallen. Diese Verunreinigungen sind schwer zu entfernen. Die gemessene Größenordnung der Metallverunreinigung stieg bei Anwendung des Granulatverfahrens um zwei Zehnerpotenzen an.

Das fluorierte Agglomerat wird anschließend schmelzgranuliert.

Bei der Trocknung und der Fluorierung wird das Agglomerat in gewissem Maß zerkleinert. Dabei entstehen Feinanteile, die den freien Fluß des Materials behindern. Es ist vorteilhaft, das fluorierte Agglomerat vor der Schmelzgranulierung zu kompaktieren. Auf diese Weise wird eine verläßlichere konstante Zudosierungsrate erreicht.

Die Schmelzgranulierung von fluorierten Agglomeraten bietet im Vergleich zur Schmelzgranulierung von nichtfluorierten Agglomeraten viele Vorteile. Die Schmelzgranulierung verläuft praktisch ohne Zersetzung. Der MFI-Wert bleibt nahezu unverändert. Dieser Befund läßt darauf schließen, daß im wesentlichen keine schwachen Hauptkettenbindungen vorliegen. Die Korrosion der verwendeten Apparaturen wird wesentlich reduziert. Daher werden Metallverunreinigungen nur in unbedeutender Menge aufgenommen. Die Emission von gasförmigen Zersetzungsprodukten am Düsenausgang wird wesentlich reduziert (zum Beispiel um vier Zehnerpotenzen). Das gesamte Verfahren wird dadurch wesentlich sicherer. Das Auftreten von Düsenverlegungen wird wesentlich reduziert. Daher ist das Verfahren leichter zu überwachen. Die Schmelzgranulate weisen im Unterschied zu Schmelzgranulaten aus nichtfluorierten Agglomeraten, die den Extruder häufig typisch kaffeebraun gefärbt verlassen, keinerlei Verfärbung auf.

Der MFI-Wert des nach dem oben beschriebenen Verfahren hergestellten Schmelzgranulats nimmt im Vergleich zum bei der Polymerisation angefallenen Copolymer nur leicht, nämlich um etwa 10 %, zu. Dadurch kann man leichter eine gleichbleibende Qualität erzielen.

Das Schmelzgranulat wird, wie in DE-A-195 47 909 beschrieben, zur Entfernung von flüchtigen Anteilen und COF-Gruppen einer wäßrigen Behandlung unterworfen. Da kaum gasförmige Zersetzungsprodukte und saure Endgruppen vorhanden sind, wird auch hier die Korrosion des aus rostfreiem Stahl bestehenden Wasserbehandlungsbehälters beträchtlich verringert. Außerdem wird die weitere Verunreinigung mit Schwermetallen vermindert. Darüber hinaus werden aus dem Herstellungsverfahren stammende wasserlösliche Salze entfernt. Die Menge an extrahierbarem Fluorid wird auf weniger als 1 ppm vermindert.

Prüfmethoden

Der MFI-Wert wird gemäß ASTM D 1238 (DIN 53735) bei 372 °C mit einer Last von 5 kg gemessen. Der MFI-Wert kann in den Wert der Schmelzviskosität in 0,1 Pas (Poise) umgerechnet werden, indem man 53150 durch den MFI-Wert dividiert (g/10 min).

Der Gehalt an HFP kann durch FTIR-Spektroskopie gemäß US-A-4 552 925 ermittelt werden. Die Absorption bei den Wellenzahlen 980 cm$^{-1}$ bzw. 2350 cm$^{-1}$ wird an einem Film der Dicke 0,05 ± 0,01 mm bestimmt, der bei 350 °C hergestellt wird und mit einem FTIR-Nicolet Magna 560 FTIR-Spektrometer vermessen wird. Der HFP-Gehalt wird gemäß folgender Gleichung ermittelt:

$$\text{HFP-Gehalt (Gew.-\%)} = A_{980}/A_{2350} \times 3.2.$$

Die Endgruppen (-COOH, -COF, -CONH$_2$) werden mittels FTIR-Spektroskopie bestimmt, wie es in EP-B-226 668 und US-A-3 085 083 beschrieben ist. Dabei verwendet man einen bei 350 °C hergestellten Film mit einer Dicke von 0,1 mm und einen Referenzfilm aus einem Material, das keine der zu analysierenden Endgruppen enthält. Es wurde ein Nicolet Magna 560 FTIR-Spektrometer mit Software im interaktiven Substraktionsmodus verwendet. Bei Angabe der Zahl der Endgruppen ist die Summe der isolierten und assoziierten COOH-, CONH$_2$- und COF-Gruppen gemeint.

Die Schmelzpunkte der Copolymere wurden durch DSC nach ASTM D 4591-87 mit einer Aufheizrate von 10 K/min. bestimmt. Die hier angegebene Schmelztemperatur ist die Peaktemperatur der Endotherme beim zweiten Schmelzen.

Die Breite der Molekulargewichtsverteilung, die durch das Mw/Mn-Verhältnis charakterisiert ist, wurde durch rheologische Spektroskopie mit einem "Advanced Rheometer Expansion System" (ARES) der Firma Rheometric Scientific bestimmt. Die Messungen wurden bei 372 °C durchgeführt und nach der Methode von W. H. Tuminello, Polym. Eng. Sci. 26, 1339 (1989), ausgewertet.

Zur Bestimmung der Metallgehalte wurden die Proben bei Raumtemperatur 72 Stunden lang mit 3%iger HNO$_3$ extrahiert und die Extrakte mittels Atomabosrptionsspektroskopie analysiert.

Der Gehalt an extrahierbaren Fluoridionen im Schmelzgranulat wurde nach der in EP-B-220 910 angegebenen Methode bestimmt. Die Extraktion wurde jedoch nur mit Wasser durchgeführt.

Beispiel 1

In einem 1500-l-Reaktor aus rostfreiem Stahl wurden 1000 l entionisiertes Wasser mit 3 kg des Ammoniumsalzes der Perfluoroctansäure vorgelegt. Die Luft wurde durch Evakuieren und durch Spülen mit Stickstoff entfernt. Der Reaktor wurde auf 70 °C aufgeheizt und bei dieser Temperatur gehalten. Danach wurden 2 kg einer 25%igen wäßrigen Ammoniaklösung zugegeben.

Der Reaktor wurde mit TFE und HFP auf einen Gesamtdruck von 17 bar gebracht, wobei der HFP-Partialdruck 12,5 bar betrug. Die Polymerisation wurde durch Zugabe von 1600 g Ammoniumpersulfat als Lösung in 5 l entionisiertem Wasser innerhalb von 10 min in Gang gebracht. Der Druck wurde durch Einspeisung einer Gasmischung aus TFE/HFP in den Reaktor konstant gehalten. Das TFE/HFP-Gewichtsverhältnis betrug 0,14. Nach 6 Stunden wurde die Reaktion durch Unterbrechung der Monomerzufuhr beendet. Die Monomere wurden durch Entspannen des Reaktors abgelassen. Der Reaktor wurde nach Abkühlen auf Raumtemperatur entladen. Der Feststoffanteil der Polymerdispersion betrug 29 %. Die Dispersion war praktisch frei von Koagulat. Der MFI-Wert betrug 20 g/10 min. Der HFP-Gehalt des Copolymers belief sich auf 13 Gew. -%. Der Schmelzpunkt betrug 255 °C. Das Copolymer wies 660 COOH-Endgruppen pro 10$^6$ Kohlenstoffatome auf. Das gemessene Mw/Mn-Verhältnis betrug 1,7, wohingegen das aus der Auftragung der Polymerisationsgeschwindigkeit gegen die Zeit berechnete Mw/Mn-Verhältnis sich auf 1,6 belief.

Die Dispersion wurde mit einem Homogenisator koaguliert und mit Benzin agglomeriert. Das Agglomerat wurde dreimal mit entionisiertem Wasser gewaschen und 6 Stunden bei 180 °C in einem Taumeltrockner getrocknet, wobei zunächst mit Stickstoff gespült und dann im Vakuum fertig getrocknet wurde.

Das erhaltene Agglomerat wurde in zwei Teile aufgeteilt. Ein Teil wurde anschließend schmelzgranuliert, mit Wasser gewaschen und getrocknet, wobei sich eine kaffeebraune Farbe ergab. Nach Fluorierung und nochmaliger Behandlung mit Wasser zur Entfernung von verbliebenen COF-Endgruppen verschwand die Verfärbung. Diese Probe wird als A0 bezeichnet. Das Material wies 43 Endgruppen pro Million Kohlenstoffatome auf. Der andere Teil des Agglomerats wurde zunächst fluoriert, dann schmelzgranuliert, mit Wasser behandelt und getrocknet. Diese Probe mit der Bezeichnung A1 wies nur 18 Endgruppen pro Million Kohlenstoffatome auf.

Bei jedem Verfahrensschritt wurde der Gehalt an Eisen, Nickel und Chrom nach dem Extraktionsverfahren ermittelt. Die Ergebnisse sind zusammen mit dem Betrag an Endgruppen in Tabelle 1 aufgeführt.

Tabelle 1:

| Metallkontamination der Proben A0 und A1 nach den verschiedenen Aufarbeitungsschritten. Das Agglomerat wies 660 Endgruppen auf. | | | | | |
|---|---|---|---|---|---|
| Probe A0: Fluorierung des Schmelzgranulats (Vergleich) | | | | | |
| Aufarbeilungsschritte | | | | | |
| Metallionen | Agglomerat [ppb] | Schmelzgranulat (ppb) | mit Wasser behandelt [ppb] | fluoriertes Schmelzgranulat [ppb] | Endprodukt: Schmetzgranulat nach Wasserwasche[*] [ppb] |
| Fe | 10 | 247 | 198 | 892 | 550 |
| Ni | > 10 | 41 | 22 | 56 | 21 |
| Cr | >10 | 38 | 19 | 71 | 27 |
| Probe A1: Fluorierung des Agglomerats (Erfindung) | | | | | |
| Aufarbeitungsschritte | | | | | |
| Metallionen | Agglomerat [ppb] | fluoriertes Agglomerat [ppb] | Schmelzgranulat [ppb] | Endprodukt: Schmelzgranulat nach Wasserwäsche[*] [ppb] | |
| Fe | 10 | 14 | 18 | 14 | |
| Ni | > 5 | > 5 | > 5 | > 5 | |
| Cr | > 5 | > 5 | > 5 | > 5 | |
| [*]43 Endgruppen pro Million Kohlenstoffatome [*]18 Endgruppen pro Million Kohlenstoffatome | | | | | |

Die Fluorierung wurde in einen 300-l-Taumeltrockner aus rostfreiem Stahl mit einer Mischung aus 10 % Fluor in Stickstoff bei 140 °C (Probe A0) beziehungsweise bei 100 bis 140 °C (Probe A1) durchgeführt. Einzelheiten sind in Tabelle 2 aufgeführt. Die Fluormischung mußte mehrmals ausgetauscht werden (Nachfüllung). Am Ende der Fluorierung wurde überschüssiges Fluor durch Spülen mit Luft aus dem Reaktor verdrängt. Das überschüssige Fluor wurde durch Hindurchleiten des Luftstroms durch eine Schüttung von $Al_2O_3$-Granulat und durch einen eine wäßrige $CaCO_3$-Aufschlämmung enthaltenden Wäscher absorbiert.

Tabelle 2:

| Fluorierungsbedingungen für Proben A0 bzw. A1 | | | | | |
|---|---|---|---|---|---|
| Probe | Zustand | Reaktionstemperatur [°C] | Zahl[*] der Nachfüllungen | Gesamtreaktionszeit [h] | Endgültige[**] Zahl der Endgruppen |
| AO | Schmelzgranulat | 200 | 16 | 8.5 | 43 |
| Al | Agglomerat | 140 | 7 | 4 | 12 |
| [*] Nachfüllung nach jeder halben Stunde, außer der letzten Stunde [**] Endgruppen sind die Summe von COOH. COF and $CONH_2$ pro Million Kohlenstoffatome | | | | | |

Die wäßrige Behandlung des Schmelzgranulats (siehe DE-A-195 47 909) wurde in einem 1000-l-Reaktor aus rostfreiem Stahl durchgeführt. 200 kg des Schmelzgranulats und 400 l entionisiertes Wasser mit 1 l einer 25%igen Ammoniaklösung wurden im Reaktor vorgelegt. Der Reaktor wurde auf 100 °C aufgeheizt und im Fall des nichtfluorierten Schmelzgranulats 4 Stunden und im Fall des fluorierten Schmelzgranulats 1 Stunde bei dieser Temperatur gehalten.

Diese Reaktionszeit wird benötigt, um den Gehalt an COF-Endgruppen auf weniger als 5 ppm zu verringern. Der Reaktor wurde durch zweimaliges Austauschen des Wassers gekühlt. Die Trocknung des Produkts erfolgte durch Einblasen von Heißluft in den Reaktor. Das Schmelzgranulat wies einen Gehalt an extrahierbaren Fluoridionen von 0,1 ppm auf.

Beispiel 2

Probe A11 wurde zusammen mit einem handelsüblichen Produkt mit der Bezeichnung C1 unter zwei verschiedenen Sätzen von Bedingungen über einen Drahtbeschichtungsextruder geschickt. Probe A11 wurde wie A1 hergestellt, besaß aber einen MFI-Wert von 24 g/10 min. Bezüglich Polymerisation und Aufarbeitung wurde bei A11 wie bei A1 verfahren. A11 weist 28 Endgruppen und einen Eisengehalt von 18 ppb auf. Das gemessene Mw/Mn-Verhältnis betrug 1,6. Der berechnete Wert betrug 1,7. Der Gehalt an extrahierbaren Fluoridionen betrug 0,2 ppm.
Die Beschichtungsbedingungen sind in Tabelle 3 aufgeführt.

Tabelle 3

| Beschichtungsverhalten des erfindungsgemäßen Materials im Vergleich zum handelsüblichen Produkt C1 und zur Probe A0 | | | |
|---|---|---|---|
| Lauf Nr. | 1 | 2 | 3 |
| Probe | A11 | A11 | C1 |
| MFI (372/5) in [g/10 min] | 24 | 24 | 21 |
| Kupferdraht-Temperatur [°C] | 176 (350 F) | 193 (380 F) | 177 (350 F) |
| Kegellänge [cm] | 5.1 (2.0 Zoll) | 3.8 (1.5 Zoll). | 5.1 (2,0 Zoll) |
| Düsentemperatur [°C] | 380 (716 F) | 391 (735 F) | 380 (716 F) |
| Extrudergeschwindigkeit [U/min) | 21.3 | 24.7 | 18.5 |
| Liniengeschwindigkeit [m/min] | 521 (1710 f/min) | 611 (2006 f/min) | 427 (1402 f/min) |

Die Temperaturprofile, die in der Tabelle nicht aufgeführt sind, wurden zur Maximierung des Linienausstoßes etwas nachgeregelt, wobei die Abweichung von der Isolierungsexzentrizität zwischen 0,00076 und 0,0018 cm (0,0003 und 0,0007 Zoll) gehalten wurde.
In den Läufen 1 und 2 waren während der Laufzeit weder deutliche Düsenverlegungen noch Kegelbrüche feszustellen. Im Lauf 3 wurden bei gleicher Laufzeit beträchtliche Düsenverlegungen und Kegelbrüche festzustellen. Bei Alterung von C1 oberhalb der Schmelztemperatur (das heißt 250 °C) ergab sich eine merkliche bräunliche Verfärbung.

Beispiel 3

Die Proben A11, A12 und handelsübliche Produkte wurden durch einen leicht verschiedenen Drahtbeschichtungsextruder geschickt.
Die Beschichtungsbedingungen sind in Tabelle 4 aufgeführt.

Tabelle 4

| Beschichtungsverhalten des erfindungsgemäßen Materials im Vergleich zu zwei Handelsprodukten | | |
|---|---|---|
| Lauf Nr. | 1 | 2 |
| Probe | A11/A12 | C2 |
| MFI (372/5) in [g/10 min] | 24/23 | 25 |
| Kupferdraht-Temperatur [°C] | 193/190 (380 F/375 F) | 177 (350 F) |
| Kegellänge [cm] | 5,1 (2.0 Zoll) | 5,1 (2,0 Zoll) |
| Düsentemperatur [°C] | 404 (760 F) | 404 (760 F) |
| Extrudergeschwindigkeit [U/min] | 42,5 | 32,0 |
| Liniengeschwindigkeit [m/min] | 518 (1700 f/min) | 415/417 (1390 f/min) |

Die Temperaturprofile wurden zur Maximierung des Linienausstoßes etwas nachgeregelt, wobei die Abweichung von der Isolierungsexzentrizität zwischen 0,00076 und 0,0018 cm (0,0003 und 0,0007 Zoll) gehalten wurde.

Im Lauf Nr. 1 waren über einen Zeitraum von 29 Stunden bei der Extrusion von Drähten in den Farben blau, grün, orange, braun und weiß keine deutlichen Düsenverlegungen und nur 2 Kegelbrüche zu beobachten.

Im Lauf Nr. 2 waren während einer Laufzeit von 24 Stunden beträchtliche Düsenverlegungen und durchschnittlich 6 bis 8 Kegelbrüche festzustellen.

**Patentansprüche**

1. Verwendung eines aus der Schmelze verarbeitbaren, schmelzgranulierten Copolymer, das im wesentlichen aus Monomereinheiten von 78 bis 95 Gew.-% Tetrafluoethylen, 5 bis 22 Gew.-% Hexafluorpropen und höchstens 3 Mol-% fluorierten Monomeren, die mit einem Gemisch von Tetrafluorethylen und Hexafluorpropen copolymerisierbar sind, besteht, ein Verhältnis von gewichtsmittlerem zu zahlenmittlerem Molekulargewicht von mindest 1,5 und weniger als 2 und weniger als 30 instabile Endgruppen pro $1 \cdot 10^6$ Kohlenstoffatome aufweist und durch wäßrige Emulsionspolymerisation, Agglomeration, Nachfluorierung der Agglomerate und anschließender Schmelzgranulierung erhalten wird zur Beschichtung von Drahtleitern.

2. Verwendung nach Anspruch 1, wobei das Copolymer weniger als 200 ppb Schwermetalle enthält.

3. Verwendung nach Anspruch 1 oder 2, wobei das Copolymer im wesentlichen kein extrahierbares Fluorid enthält.

4. Verfahren zur Herstellung eines Copolymers, das im wesentlichen aus Einheiten von 78 bis 95 Gew.-% Tetrafluorethylen, 5 bis 22 Gew.-% Hexafluorpropen und höchstens 3 Mol-% fluorierten Monomeren, die mit einem Gemisch von Tetrafluorethylen und Hexafluorpropen copolymerisierbar sind, besteht und ein Verhältnis von gewichtsmittlerem zu zahlenmittlerem Molekulargewicht von weniger als 2 und weniger als 80 instabile Endgruppen pro $1 \cdot 10^6$ Kohlenstoffatome aufweist, bei dem man die Monomere durch wäßrige Emulsionspolymerisation in wäßrigem Medium polymerisiert, das Copolymer im wesentlichen mit mechanischen Mitteln koaguliert, das koagulierte Copolymer agglomeriert, indem man es mit einer mit Wasser im wesentlichen nicht mischbaren organischen Flüssigkeit in Berührung bringt, das Agglomerat isoliert, das Agglomerat ohne Teilsintern zu einem freifließenden Produkt trocknet, das freifließende Agglomerat bei einer Temperatur von 60 °C bis zur Vorsintertemperatur so lange mit einer wirksamen Menge Fluor in Berührung bringt, daß instabile Endgruppen im wesentlichen in stabile Endgruppen überführt werden, das fluorierte Agglomerat schmelzgranuliert und das Schmelzgranulat bei einer Temperatur von 60 bis 130 °C mit Wasser in Berührung bringt.

5. Verfahren nach Anspruch 4, bei dem man ein wäßriges Polymerisationsmedium einsetzt, das im wesentlichen frei von Kettenübertragungsmitteln ist.

6. Verfahren nach Anspruch 4, bei dem man als Polymerisationsmedium Wasser einsetzt.

7. Verfahren nach Anspruch 4, bei dem man ein Polymerisationsmedium einsetzt, das im wesentlichen frei von Alkalimetallionen ist.

8. Verfahren nach Anspruch 4, bei dem man bei der Agglomerierung eine organische Flüssigkeit einsetzt, die frei von Halogenatomen ist.

9. Verfahren nach Anspruch 4, bei dem man die Fluorierung bei einer Temperatur von 60 bis 150 °C durchführt.

10. Verfahren nach Anspruch 4, bei dem man das Schmelzgranulat mit 0,01 bis 1 Gew.-% Ammoniak oder eine Verbindung, die unter den Kontaktierungsbedingungen Ammoniak freisetzt, enthaltendem Wasser in Berührung bringt.

**Claims**

1. Use of a melt-processable, melt-granulated copolymer which consists essentially of monomer units of 78 to 95 wt % tetrafluoroethylene, 5 to 22 wt % hexafluoropropene, and not more than 3 mol % fluorinated monomers copolymerizable with a mixture of tetrafluoroethylene and hexafluoropropene, has a weight-average to number-average molecular weight ratio of at least 1.5 and less than 2, and less than 30 unstable end groups per $1 \cdot 10^6$ carbon atoms,

and is obtained by aqueous emulsion polymerization, agglomeration, post-fluorination of the agglomerates, and subsequent melt granulation for coating wire conductors.

2. Use according to claim 1, wherein the copolymer contains less than 200 ppb heavy metals.

3. Use according to claim 1 or 2, wherein the copolymer contains essentially no extractable fluoride.

4. Method for producing a copolymer which consists essentially of units of 78 to 95 wt % tetrafluoroethylene, 5 to 22 wt % hexafluoropropene, and not more than 3 mol % fluorinated monomers copolymerizable with a mixture of tetrafluoroethylene and hexafluoropropene and has a weight-average to number-average molecular weight ratio of less than 2 and less than 80 unstable end groups per $1 \cdot 10^6$ carbon atoms, wherein the monomers are polymerized by aqueous emulsion polymerization in an aqueous medium, the copolymer is essentially coagulated by mechanical means, the coagulated copolymer is agglomerated by bringing it into contact with an essentially water-immiscible organic liquid, the agglomerate is isolated, the agglomerate is dried without partial sintering to a free-flowing product, the free-flowing agglomerate is brought into contact at a temperature of 60 °C up to presintering temperature with an effective amount of fluorine long enough that unstable end groups are essentially converted into stable end groups, the fluorinated agglomerate is melt granulated, and the melt granules are brought into contact at a temperature of 60 to 130 °C with water.

5. Method according to claim 4, wherein an aqueous polymerization medium is used which is essentially free of chain transfer agents.

6. Method according to claim 4, wherein water is used as the polymerization medium.

7. Method according to claim 4, wherein a polymerization medium essentially free of alkali metal ions is used.

8. Method according to claim 4, wherein an organic liquid free of halogen atoms is used during the agglomeration.

9. Method according to claim 4, wherein the fluorination is carried out at a temperature of 60 to 150 °C.

10. Method according to claim 4, wherein the melt granules are brought into contact with 0.01 to 1 wt% ammonia or water containing a compound which releases ammonia under the contacting conditions.

## Revendications

1. Utilisation d'un copolymère pouvant être transformé à partir de la masse fondue, granulé en masse fondue, qui est constitué essentiellement par des motifs monomères constitués par 78 à 95 % en poids de tétrafluoroéthylène, 5 à 22 % en poids d'hexafluoropropène et au plus 3 % en mole de monomères fluorés, qui sont copolymérisables avec un mélange de tétrafluoroéthylène et d'hexafluoropropène, qui présente un rapport de poids moléculaire moyen en poids à poids moléculaire moyen en nombre d'au moins 1,5 et inférieur à 2 ainsi que moins de 30 groupes terminaux instables par $1,10^6$ atomes de carbone et qui est obtenu par polymérisation en émulsion aqueuse, par agglomération, par postfluoration des agglomérats et par granulation en masse fondue consécutive pour le revêtement de fils conducteurs.

2. Utilisation selon la revendication 1, le copolymère contenant moins de 200 parties par milliard de métaux lourds.

3. Utilisation selon la revendication 1 ou 2, le copolymère ne contenant essentiellement pas de fluorure pouvant être extrait.

4. Procédé pour la préparation d'un copolymère qui est constitué essentiellement par des motifs constitués par 78 à 95 % en poids de tétrafluoroéthylène, 5 à 22 % en poids d'hexafluoropropène et au plus 3 % en mole de monomères fluorés, qui sont copolymérisables avec un mélange de tétrafluoroéthylène et d'hexafluoropropène, et qui présente un rapport de poids moléculaire moyen en poids à poids moléculaire moyen en nombre inférieur à 2 ainsi que moins de 80 groupes terminaux instables par $1,10^6$ atomes de carbone, dans lequel on polymérise les monomères par polymérisation en émulsion aqueuse dans un milieu aqueux, on coagule le copolymère essentiellement par des moyens mécaniques, on agglomère le copolymère coagulé en ce qu'on le met en contact avec un liquide organique essentiellement non miscible à l'eau, on isole l'agglomérat, on sèche l'agglomérat sans frittage partiel en un produit pouvant s'écouler librement, on met en contact l'agglomérat pouvant s'écouler librement, à une température de 60 °C jusqu'à la température de préfrittage, avec une quantité active de fluor pendant une période telle que les groupes terminaux instables sont transformés essentiellement en groupes terminaux stables, on granule l'agglomérat fluoré en masse fondue et on met en contact le granulat en masse fondue, à une température de 60 à 130 °C, avec de l'eau.

5. Procédé selon la revendication 4, dans lequel on utilise un milieu de polymérisation aqueux qui est essentiellement exempt d'agents de transfert de chaîne.

6. Procédé selon la revendication 4, dans lequel on utilise de l'eau comme milieu de polymérisation.

7. Procédé selon la revendication 4, dans lequel on utilise un milieu de polymérisation qui est essentiellement exempt d'ions de métal alcalin.

8. Procédé selon la revendication 4, dans lequel, lors de l'agglomération, on utilise un liquide organique qui est exempt d'atomes d'halogène.

9. Procédé selon la revendication 4, dans lequel on réalise la fluoration à une température de 60 à 150 °C.

10. Procédé selon la revendication 4, dans lequel on met le granulat en masse fondue en contact avec de l'eau contenant 0,01 à 1 % en poids d'ammoniaque ou de l'eau contenant un composé qui libère de l'ammoniaque dans les conditions de mise en contact.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 423995 A
- US 4552925 A
- DE 2613642
- DE 2613795
- GB 1210794 A
- US 4743658 A
- EP 457225 B
- EP 222945 B
- US 4626587 A
- EP 789038 A

- EP 0222945 A
- WO 945712 A
- DE 2710501 C
- US 2946763 A
- US 3528954 A
- EP 591888 B
- DE 19547909 A
- EP 226668 B
- US 3085083 A
- EP 220910 B

**In der Beschreibung aufgeführte Nicht-Patentliteratur**

- Modern Fluoropolymers. Wiley & Sons, 1997, 228
- **W. H. TUMINELLO.** *Polym. Eng. Sei.,* 1986, vol. 26, 1339
- Modern Fluoropolymers. Wiley & Sons, 1997, 241

- Modern Fluoropolymers. Wiley & Sons, 1997, 226
- Modern Fluoropolymers. Wiley & Sons, 1997, 227
- **W. H. TUMINELLO.** *Polym. Eng. Sci.,* 1989, vol. 26, 1339